# EUROPEAN PATENT SPECIFICATION

(11) **EP 2 841 786 B1**
(45) Date of publication and mention of the grant of the patent: **06.06.2018**
(21) Application number: 13717235.9
(22) Date of filing: 09.04.2013
(51) Int. Cl.: F16C 41/00, H02K 7/18

(54) **BEARING POWER GENERATING CONFIGURATION**
LAGERENERGIEERZEUGUNGSKONFIGURATION
CONFIGURATION DE PALIER GÉNÉRATEUR D'ÉNERGIE

(30) Priority: 24.04.2012 WO PCT/EP2012/057437
(43) Date of publication of application: 04.03.2015
(73) Proprietor: Aktiebolaget SKF, 415 50 Göteborg (SE)
(72) Inventor: VAN DER HAM, Andreas Clemens, NL-3521 BE Utrecht (NL); BARTL, Frank, 79639 Grenzach-Wyhlen (DE); ERSKINE, Joseph, Shieldhill Falkirk FK1 3AT (GB); ZIEGLER, Sebastian, NL-3532 HL Utrecht (NL)
(74) Representative: Kohl, Thomas
(86) International application number: PCT/EP2013/057380
(87) International publication number: WO 2013/160098

(56) References cited:
- EP-A2- 0 829 410
- JP-A- 2003 278 782
- US-A- 4 948 277
- US-A1- 2002 033 638
- US-A1- 2003 173 844
- US-A1- 2004 105 602

## Description

### Technical Field Of The Invention

The present invention relates to an apparatus and method for generating power during motion of a bearing.

### Background

A bearing can be defined as any of various machine elements that constrain the relative motion between two or more parts to only the desired type of motion. This is typically to allow and promote free rotation about a longitudinal axis and/or restrain any linear movement of a component in a normal direction respective to the bearing. Bearings may be classified broadly according to the motions they allow and according to their principle of operation, as well as by the directions of applied loads they can handle.

Bearings undergo significant use, which causes wear to the various bearing components. Over time, the wear on the bearing can result in mechanical failure. Mechanical failure can impact the rotational motion and/or the axial linear restraint. Failure to control either of these movements can cause catastrophic failure to the machinery relying upon the bearing.

Bearing reliability and predictive servicing can impact the operation and uptime of equipment. Bearings are used in many applications, including vehicles, wind turbines, automated machinery, and the like. Over time, the bearings wear. Bearing failure during operation can cause significant damage to the equipment and possibly the surrounding area. The bearing failure could even potentially cause injury or death to people should the right circumstances come occur.

Bearing monitoring systems require power for operation. Power is utilized for operating the condition monitoring sensors, providing power for any computing devices, and providing power for transferring any collected information to a centralized system. The power is provided through wiring to the devises.

Bearing reliability and predictive servicing can be improved by monitoring the bearing. A monitoring system would require power. What is desired is a power generating system associated with the bearing assembly.

One example of such a power generating system is described in EP0829410. A railway axle bearing provided with a sealing device having a rigid, non-rotating shield is disclosed, whereby a current generator is integrated with the sealing device, the current generator consisting of a magnetised impulse generating ring rotatably fixed with one of the rotating parts of the bearing, and a coil operatively facing the magnetised impulse ring and secured to the non-rotating shield.

A further example of a bearing assembly with an integrated generator provided on a sealing member is known from US2002033638. In an embodiment, a cylindrical portion of a first sealing member is press-fitted onto an inner ring of the bearing. The first sealing member further includes an upright plate portion bent radially outwardly from the cylindrical portion, a back-turned upright plate portion turned radially inwardly from a free end of the upright plate portion, and an outer cylindrical portion bent from a radially inner end of the back-turned upright plate portion so as to extend axially outwardly from the bearing assembly. A multi-pole magnet is disposed on a side face of the back-turned upright plate portion facing outwardly of the bearing assembly. The magnet faces a coil provided on a second sealing member that is mounted to the bearing outer ring.

### SUMMARY OF THE INVENTION

The present invention is directed towards a power generating bearing assembly according to claim 1. In a second aspect, the system further includes a processing device comprising a set of digital instructions for monitoring and analyzing digital data provided by a condition monitoring system integrated into the bearing assembly.

In another aspect, the electrical power generator further comprises a circumferential gliding material disposed on a surface opposing the magnetically polarized material.

In another aspect, the sealing system provides for tolerance compensation along a radial direction.

In another aspect, the magnetically polarized material is provided having a height greater than a predetermined anticipated axial motion of the generator core.

In another aspect, the magnetically polarized material can be provided in a complete annular ring; in a single section covering a partial circularly shaped section; or in a series of sections which are spatially at equal radial distances from a bearing ring center.

One advantage of the present invention is the ability to generate a continued electrical current during motion of one of the rings of the bearing. The power can be utilized to operate bearing condition monitored equipment. The inclusion of an electrical power-generating device eliminates any need for a locally stored power (such as by a battery) or conveyed power from an external power source. By generating power at the location, the system can operate completely independent and un-tethered from any other device by providing sufficient power for wireless signal communications. While yet another advantage is that operation of the monitoring system can be limited to the time where the bearing is undergoing rotation. Power is only applied to the system when the generator is subjected to the relative motion between the bearing outer ring and the bearing inner ring.

Bearings can be utilized on equipment deployed in remote locations. The location could complicate any provisions for externally provided power for monitoring the condition of the bearing. The bearing(s) can be integrated into the equipment at a location that is difficult to access, particularly for wiring. Further, wires can accidentally interfere or become abraded by any rotational movements or other movements of components of the equipment.

Another advantage enables the registration between the electrical power generator and the magnetically polarized material to adapt to changes and wear of the bearing. The mechanical interface includes features to accommodate for radial and axial changes between the electrical power generator and the magnetically polarized material.

The use of a magnetic density operated generator core eliminates any wear and reliability issues associated with moving components. Any contacting surfaces can include bearings, friction reduced surfaces, and the like to minimize any impact resulting from relative motion between two moving components contacting one another.

In a configuration where the sealing system is attached to the bearing inner ring, the centrifugal force ensures the magnetically polarized material remains proximate the generator core. A sealing feature rides against the bearing race engaging surface to adapt the radial position of the magnetically polarized material supporting member, thus retaining the axial relation between the magnetically polarized material supporting member and the electrical power generator. The axial relation between the magnetically polarized material supporting member and the electrical power generator is an air gap.

In a configuration where the sealing system is attached to the bearing outer ring, the annular ring shape retains the magnetically polarized material proximate to the generator core.

These and other features, aspects, and advantages of the invention will be further understood and appreciated by those skilled in the art by reference to the following written specification, claims and appended drawings, which follow.

### BRIEF DESCRIPTION OF THE DRAWINGS

For a fuller understanding of the nature of the present invention, reference should be made to the accompanying drawings in which:
FIG. 1 presents an exemplary schematic diagram of a bearing power generator and bearing condition monitoring system;
FIG. 2 presents an isometric top view of an exemplary power generating bearing assembly; and
FIG. 3 presents a sectioned view of the exemplary power generating bearing assembly originally introduced in FIG. 2, the section taken along section line 3--3 of FIG. 2.

Like reference numerals refer to like parts throughout the several views of the drawings.

### MODES FOR CARRYING OUT THE INVENTION

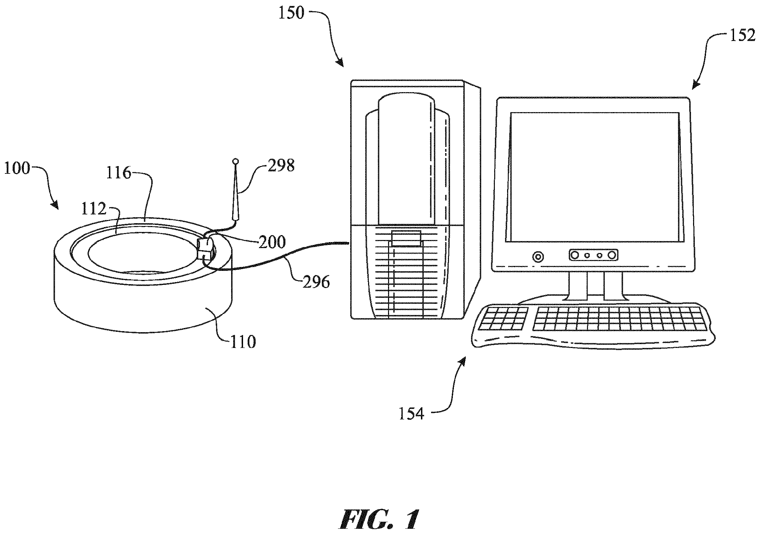

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper", "lower", "left", "rear", "right", "front", "vertical", "horizontal", and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

A generic exemplary system schematic is presented in FIG. 1. The generic system includes a power generating bearing assembly 100 comprising a power generating subassembly 200 integrated into bearing 110. The bearing 110 is fabricated having a bearing inner ring 112 assembled within a bearing outer ring 116, wherein the interface between the bearing inner ring 112 and the bearing outer ring 116 restrains the relative motion to a rotational motion about a central axis. The relative rotational motion provided between the bearing inner ring 112 and the bearing outer ring 116 causes the power generating subassembly 200 to generate electrical energy in a form of an electrical current. The power generating subassembly 200 can include a sensor, a digital signal processor or any other device to embed a digital data signal within a current. The digital data signal is transmitted to a processing unit 150 via a wired signal interface 296 or preferably via a wireless signal interface 298. The wireless signal interface 298 includes circuitry and components respective to any selected wireless transmitting protocol. Power would be provided by the power generating subassembly 200 to operate the wireless signal interface 298.

The processing device 150 includes common digital data processing components, include a motherboard, at least one microprocessor, memory, a data recording device, digital instructions (such as software, firmware, and the like), input/output controllers, data communication devices, and the like. A user input device 154 and a user output device 152 are connected in signal communication to the processing device 150 through the input/output controllers. The digital data signal is received by the processing unit 150 and interpreted accordingly. The digital data signal would be provided when the power generating bearing assembly 100 is subjected to movement. The relative movement between the bearing inner ring 112 and the bearing outer ring 116 causes the power generating subassembly 200 to generate electrical power. Therefore, the electrical power is only available when the bearing inner ring 112 and bearing outer ring 116 are in relative motion to one another. It is understood that electrical power can be stored in a capacitor or battery integrated within the power generating subassembly 200. This would enable short cycles of additional power for continued operation after the bearing inner ring 112 and bearing outer ring 116 become stationary respective to one another. This would be beneficial for recording conditions of the bearing 110 after halting any operation, during cool down, and the like. The system can be recording conditions such as temperature, and the like.

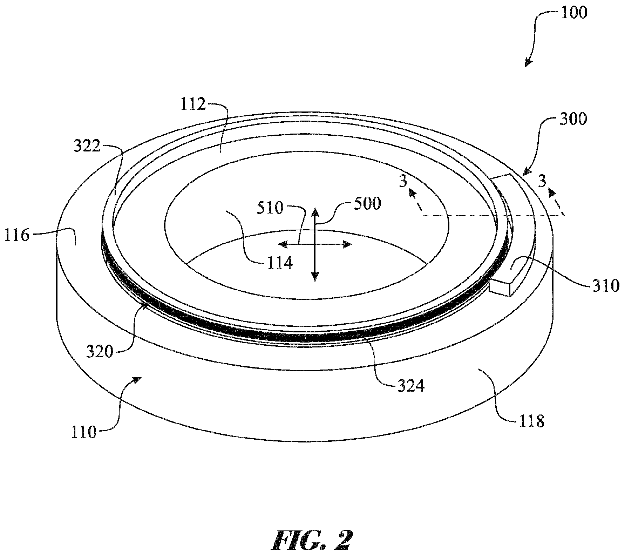

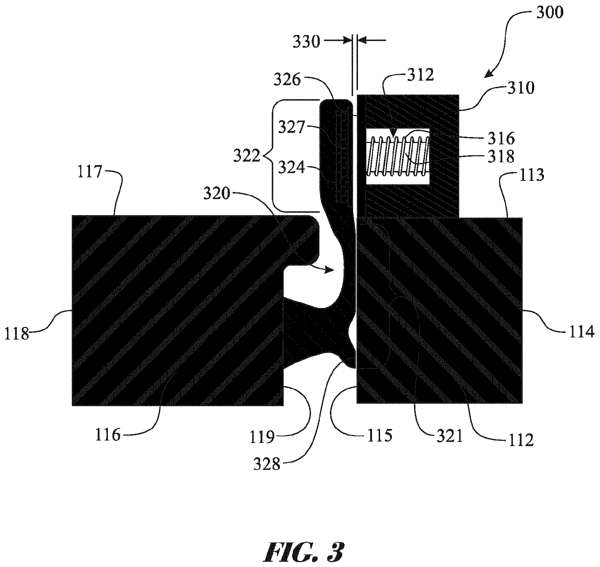

An exemplary embodiment of the power generating subassembly 200 is presented as a power generating subassembly 300 illustrated in FIGS. 2 and 3. Orientation references are represented by the directional lines illustrated in FIG. 2. An axial direction 500 is parallel to the axis or rotation of the bearing rings 112, 116. A radial direction 510 is parallel to a radius of the bearing rings 112, 116. The illustrations present additional details of the bearing 110. Features of the bearing inner ring 112 can be referred to as: a bearing assembly component engagement surface 114 defining an inner peripheral surface thereof; a bearing outer race engaging surface 115 defining an outer peripheral surface thereof; and an inner ring end surface 113 defining an end surface thereof. Features of the bearing outer ring 116 can be referred to as: a bearing outer surface 118 defining an outer peripheral surface thereof; a bearing outer race engaging surface 119 defining an inner peripheral surface thereof; and an outer ring end surface 117 defining an end surface thereof. At least one bearing race set (not shown) can be assembled between the bearing inner ring 112 and bearing outer ring 116. The bearing race set can be selected from any configuration known by those skilled in the art. A sealing system 130 can be attached to one of the bearing rings 112, 116. The bearing that retains the sealing system 130 can be referred to as a sealing attachment bearing ring. The remaining ring is a respective rotational bearing ring.

In the exemplary embodiment, the bearing 110 comprises a sealing system 320. The sealing system 320 spans between the bearing inner ring 112 and bearing outer ring 116 forming a seal therebetween. The sealing system 320 would be affixed to a sealing attachment ring, wherein the sealing attachment ring is one of the bearing outer ring 116 and the bearing inner ring 112, wherein the remaining ring is subsequently referred to as a respective rotational ring. The sealing system 320 is fabricated of any suitable sealing material, including rubber, nylon, and the like. A sealing feature 328 remains in contact with the bearing outer race engaging surface 115, providing a seal therebetween. The sealing feature 328 can be shaped in any suitable geometry to optimize the sealing interface. The sealing feature 328 additionally retains the magnetically polarized material supporting member 322 at a desired spatial arrangement with the electrical power generator 310, thus retaining an air gap 330. The sealing system 320 is provided in a circular shape (as best illustrated in FIG. 2), being continuous about the circumference of the interface between the bearing outer race engaging surface 115 and bearing outer race engaging surface 119. A magnetically polarized material supporting member 322 extends in an axial direction from a sealing section 321 extending beyond the ring end surfaces 113, 117. The sealing section 321 and the magnetically polarized material supporting member 322 are fabricated as a unitary portion of the sealing system 320. The magnetically polarized material supporting member 322 would also be formed in a continuous annular ring shape. A magnetically polarized material 324 is integrated into the magnetically polarized material supporting member 322 in a manner to engage with a generator core 312 of an electrical power generator 310. The magnetically polarized material 324 can be any material or configuration of materials providing a variable reluctance. The magnetically polarized material 324 can be provided in a complete annular ring, a series of segments spatially arranged about the annular ring, or a single independent section along the annular ring. A magnetically polarized material coating 327, fabricated of any suitable friction reducing material (described in detail below) may be applied to the exposed surface of the magnetically polarized material 324.

An electrical power generator 310 is included as a component of the power generating subassembly 300, wherein the electrical power generator 310 includes a generator core 312. The generator core 312 comprises an electrical coil 316 wound about a magnetic core 318. The electrical power generator 310 is assembled to the respective rotational ring orienting the generator core 312 in a radial direction to operationally engage with the magnetically polarized material.

An optional circumferential gliding material 326 can be attached to the electrical power generator 310, the circumferential gliding material 326 being attached upon a surface which is parallel and proximate the magnetically polarized material 324.

In operation, as the bearing inner ring 112 and bearing outer ring 116 rotate respective to one another, the generator core 312 passes across the magnetically polarized material 324. The magnetically polarized material 324 includes variations in magnetic properties, wherein as the magnetically polarized material 324 moves relative to the generator core 312, the variations in magnetic properties changes the magnetic flux of a magnetic core 318 integrated into the generator core 312. The change in magnetic flux creates an electrical current in an electrical coil 316 wrapped about the magnetic core 318. The electrical current is conveyed to other equipment by wires or other electrical conduits.

The circumferential gliding material 326 can be any friction reducing material, including Polytetrafluoroethylene (PTFE), and the like. PTFE is a synthetic fluoropolymer of tetrafluoroethylene that finds numerous applications. The most well known brand name of PTFE is Teflon (TM) manufactured by the DuPont Company (TM). Other materials, including Polyoxymethylene (POM), also known as acetal, polyacetal, and polyformaldehyde, is an engineering thermoplastic used in precision parts that require high stiffness, low friction and excellent dimensional stability The most well known exemplary brand name of POM is Delrin (TM), also manufactured by the DuPont Company (TM).

The illustrated exemplary configuration assembles the electrical power generator 310 to the bearing inner ring 112 and the sealing system 320 is affixed to the bearing outer ring 116. In this configuration, the magnetically polarized material supporting member 322 is subjected to a centrifugal force and retained in location by the circular ring shape. The magnetically polarized material supporting member 322 is retained by an air gap 330 between the magnetically polarized material 324 and the opposing surface of the electrical power generator 310.

It is also understood that the electrical power generator 310 can be assembled to the bearing outer ring 116 and the sealing system 320 can be affixed to the bearing inner ring 112. In this alternate configuration, the magnetically polarized material supporting member 322 is subjected to a centrifugal force and retained in location by the air gap 330 between the magnetically polarized material 324 and the opposing surface of the electrical power generator 310.

Since many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims.

| **Ref. No.** | **Description** |
|---|---|
| 110 | bearing |
| 112 | bearing inner ring |
| 113 | inner ring planar end surface |
| 114 | bearing assembly component engagement surface |
| 115 | bearing outer race engaging surface |
| 116 | bearing outer ring |
| 117 | outer ring planar end surface |
| 118 | bearing outer surface |
| 119 | bearing outer race engaging surface |
| 120 | bearing race set |
| 150 | processing unit |
| 152 | output device |
| 154 | user input device |
| 200 | power generating subassembly |
| 296 | wired signal interface |
| 298 | wireless signal interface |
| 300 | power generating subassembly |
| 310 | electrical power generator |
| 312 | generator core |
| 316 | electrical coil |
| 318 | magnetic core |
| 320 | sealing system |
| 321 | sealing section |
| 322 | magnetically polarized material supporting member |
| 324 | magnetically polarized material |
| 326 | circumferential gliding material |
| 327 | friction reducing material |
| 328 | sealing feature |
| 330 | air gap |
| 500 | axial direction |
| 510 | radial direction |

## Claims

1. A power generating bearing assembly, the power generating bearing assembly comprising:
a bearing (110) comprising:
a bearing outer ring (116) having an outer peripheral surface (118), an inner peripheral surface (119), being referred to as an engaging surface of the outer ring, and an outer ring end surface (117),
a bearing inner ring (112) having an inner peripheral surface (114), an outer peripheral surface (115), being referred to as an engaging surface of the inner ring, and an inner ring end surface (113), wherein the engaging surface (115) of the inner ring (112) is sized to rotationally engage with the engaging surface (119) of the outer ring (116),
a sealing system (320) provided between said bearing outer ring (116) and said bearing inner ring (112), wherein said sealing system (320) is secured to a sealing attachment ring, wherein said sealing attachment ring is one of said bearing outer ring (116) and said bearing inner ring (112), the other of said bearing outer ring (116) and said bearing inner ring (112) being referred to as a remaining ring,
a magnetically polarized material supporting member (322) carrying a magnetically polarized material (324),
wherein said inner ring (112) is rotatationally assembled within the engaging surface (119) of the outer ring; and
an electrical power generator (310) including a generator core (312) comprising an electrical coil (316) wound about a magnetic core (318) to generate electrical power, said electrical power generator (310) being attached to said remaining ring (112, 116) directing said generator core (310) in a radial direction relative to said sealing attachment ring (112, 116) to operationally engage with said magnetically polarized material (324);
wherein a relative motion between said bearing outer ring (116) and said bearing inner ring (112) passes said magnetically polarized material (324) across said generator core (312) causing said generator core (312) to create an electrical current, wherein
said sealing system (320) comprises a sealing section (321) inserted between said bearing outer ring (116) and said bearing inner ring (112), whereby:
said magnetically polarized material supporting member (322) extends in an axial direction from the sealing section (321) beyond said ring end surfaces (113, 117), the sealing section (321) and the magnetically polarized material supporting member (322) being fabricated as a unitary section of said sealing system (320) ; **characterized in that** said sealing section (321) comprises a sealing feature (328) that rides against the engaging surface (119, 115) of the remaining ring and that retains said magnetically polarized material (324) in a spatial relation with said electrical power generator (310), retaining a radial (330) air gap therebetween.

2. A power generating bearing assembly as recited in claim 1, further comprising a circumferential gliding material (326) positioned between said electrical power generator (310) and said magnetically polarized material (324).

3. A power generating bearing assembly as recited in claim 1, said magnetically polarized material (324) being provided in a complete circumference.

4. A power generating bearing assembly as recited in claim 1, said magnetically polarized material (324) being provided in a partial circumference.

5. A power generating bearing assembly as recited in claim 1, said magnetically polarized material (324) being provided in a plurality of segments, said plurality of segments being spatially arranged about a circumference.

## Patentansprüche

1. Stromerzeugende Lagerbaugruppe, wobei die stromerzeugende Lagerbaugruppe umfasst:
ein Lager (110), das umfasst:
einen Lageraußenring (116), der eine äußere Umfangsfläche (118), eine innere Umfangsfläche (119), auf die als eine eingreifende Fläche des Außenrings Bezug genommen wird, und eine Außenringendfläche (117) aufweist,
einen Lagerinnenring (112), der eine innere Umfangsfläche (114), eine äußere Umfangsfläche (115), auf die als eine eingreifende Fläche des Innenrings Bezug genommen wird, und eine Innenringendfläche (113) aufweist, wobei die eingreifende Fläche (115) des Innenrings (112) dimensioniert ist, um drehbar in die eingreifende Fläche (119) des Außenrings (116) einzugreifen,
ein Dichtungssystem (320), das zwischen dem Lageraußenring (116) und dem Lagerinnenring (112) bereitgestellt wird, wobei das Dichtungssystem (320) an einem Dichtungsbefestigungsring befestigt wird, wobei der Dichtungsbefestigungsring einer des Lageraußenrings (116) und des Lagerinnenrings (112) ist, wobei auf den anderen des Lageraußenrings (116) und des Lagerinnenrings (112) als verbleibender Ring Bezug genommen wird,
ein Trägerelement für magnetisch polarisiertes Material (322), das ein magnetisch polarisiertes Material (324) trägt,
wobei der Innenring (112) drehbar in die eingreifenden Fläche (119) des Außenrings eingebaut ist; und
einen Stromgenerator (310), der einen Generatorkern (312) enthält, der eine Elektrospule (316) umfasst, die um einen Magnetkern (318) gewickelt ist, um einen elektrischen Strom zu erzeugen, wobei der Stromgenerator (310) an dem verbleibenden Ring (112, 116) befestigt ist, und den Generatorkern (310) in einer radialen Richtung in Bezug auf den Dichtungsbefestigungsring (112, 116) ausrichtet, um funktionsfähig in das magnetisch polarisierte Material (324) einzugreifen;
wobei eine relative Bewegung zwischen dem Lageraußenring (116) und dem Lagerinnenring (112) das magnetisch polarisierte Material (324) durch den Generatorkern (312) leitet, und den Generatorkern (312) veranlasst, einen elektrischen Strom zu erzeugen,
wobei das Dichtungssystem (320) einen Dichtungsabschnitt (321) umfasst, der zwischen dem Lageraußenring (116) und dem Lagerinnenring (112) eingefügt ist, wobei:
sich das Trägerelement für magnetisch polarisiertes Material (322) in einer axialen Richtung von dem Dichtungsabschnitt (321) über die Ringendflächen (113, 117) hinaus erstreckt,
der Dichtungsabschnitt (321) und das Trägerelement für magnetisch polarisiertes Material (322) als ein einteiliger Abschnitt des Dichtungssystems (320) hergestellt sind;
**dadurch gekennzeichnet, dass** der Dichtungsabschnitt (321) ein Dichtungsmerkmal (328) umfasst, das gegen die eingreifende Fläche (119, 115) des verbleibenden Rings läuft, und das das magnetisch polarisierte Material (324) in einer räumlichen Beziehung zu dem Stromgenerator (310) beibehält, wobei dazwischen ein radialer Luftspalt (330) beibehalten wird.

2. Stromerzeugende Lagerbaugruppe nach Anspruch 1, die außerdem ein Umfangsgleitmaterial (326) umfasst, das zwischen dem Stromgenerator (310) und dem magnetisch polarisierten Material (324) angebracht ist.

3. Stromerzeugende Lagerbaugruppe nach Anspruch 1, wobei das magnetisch polarisierte Material (324) auf dem ganzen Umfang bereitgestellt wird.

4. Stromerzeugende Lagerbaugruppe nach Anspruch 1, wobei das magnetisch polarisierte Material (324) auf einem Teil des Umfangs bereitgestellt wird.

5. Stromerzeugende Lagerbaugruppe nach Anspruch 1, wobei das magnetisch polarisierte Material (324) auf einer Vielzahl von Segmenten bereitgestellt wird, wobei die Vielzahl von Segmenten räumlich verteilt auf dem Umfang angeordnet ist.

## Revendications

1. Ensemble roulement de production d'énergie, l'ensemble roulement de production d'énergie comprenant :
un roulement (110) comprenant :
une bague de roulement externe (116) ayant une surface périphérique externe (118), une surface périphérique interne (119), qui est appelée surface d'engagement de la bague externe, et une surface d'extrémité de bague externe (117),
une bague de roulement interne (112) ayant une surface périphérique interne (114), une surface périphérique externe (115), qui est appelée surface d'engagement de la bague interne, et une surface d'extrémité de bague interne (113), la surface d'engagement (115) de la bague interne (112) étant dimensionnée pour s'engager en rotation avec la surface d'engagement (119) de la bague externe (116),
un système d'étanchéité (320) disposé entre ladite bague de roulement externe (116) et ladite bague de roulement interne (112), ledit système d'étanchéité (320) étant fixé à une bague de fixation d'étanchéité, ladite bague de fixation d'étanchéité étant l'une de ladite bague de roulement externe (116) et ladite bague de roulement interne (112), l'autre de ladite bague de roulement externe (116) et ladite bague de roulement interne (112) étant appelée bague restante,
un élément de support de matériau polarisé magnétiquement (322) portant un matériau polarisé magnétiquement (324),
ladite bague interne (112) étant assemblée avec possibilité de rotation à l'intérieur de la surface d'engagement (119) de la bague externe ; et
un générateur d'énergie électrique (310) comportant un noyau de générateur (312) comprenant une bobine électrique (316) enroulée autour d'un noyau magnétique (318) pour générer de l'énergie électrique, ledit générateur d'énergie électrique (310) étant fixé à ladite bague restante (112, 116) dirigeant ledit noyau de générateur (310) dans une direction radiale par rapport à ladite bague de fixation d'étanchéité (112, 116) pour s'engager fonctionnellement avec ledit matériau polarisé magnétiquement (324) ;
dans lequel un mouvement relatif entre ladite bague de roulement externe (116) et ladite bague de roulement interne (112) fait passer ledit matériau polarisé magnétiquement (324) à travers ledit noyau de générateur (312), conduisant ledit noyau de générateur (312) à créer un courant électrique,
dans lequel ledit système d'étanchéité (320) comprend une section d'étanchéité (321) insérée entre ladite bague de roulement externe (116) et ladite bague de roulement interne (112), moyennant quoi :
ledit élément de support de matériau polarisé magnétiquement (322) s'étend dans une direction axiale depuis la section d'étanchéité (321) au-delà desdites surfaces d'extrémité de bague (113, 117), la section d'étanchéité (321) et l'élément de support de matériau polarisé magnétiquement (322) étant fabriqués comme une section unitaire dudit système d'étanchéité (320) ;
**caractérisé en ce que** ladite section d'étanchéité (321) comprend un élément d'étanchéité (328) qui monte contre la surface d'engagement (119, 115) de la bague restante et qui maintient ledit matériau polarisé magnétiquement (324) dans une relation spatiale avec ledit générateur d'énergie électrique (310), maintenant un entrefer radial (330) entre eux.

2. Ensemble roulement de production d'énergie selon la revendication 1, comprenant en outre un matériau de glissement circonférentiel (326) positionné entre ledit générateur d'énergie électrique (310) et ledit matériau polarisé magnétiquement (324).

3. Ensemble roulement de production d'énergie selon la revendication 1, ledit matériau polarisé magnétiquement (324) étant disposé dans une circonférence complète.

4. Ensemble roulement de production d'énergie selon la revendication 1, ledit matériau polarisé magnétiquement (324) étant disposé dans une circonférence partielle.

5. Ensemble roulement de production d'énergie selon la revendication 1, ledit matériau polarisé magnétiquement (324) étant disposé dans une pluralité de segments, ladite pluralité de segments étant disposée spatialement autour d'une circonférence.
